# FASCICULE DE BREVET EUROPEEN

(11) **EP 2 176 176 B1**
(45) Date de publication et mention de la délivrance du brevet: **15.06.2011**
(21) Numéro de dépôt: 08839118.0
(22) Date de dépôt: 30.07.2008
(51) Int. Cl.: C02F 3/30, C02F 3/28, C02F 3/12

(54) **PROCEDE ET INSTALLATION D'EPURATION D'EAUX RESIDUAIRES AVEC DES BOUES GRANULEUSES AEROBIES.**
VERFAHREN UND EINHEIT ZUR REINIGUNG VON ABWÄSSERN MIT AEROBEM GRANULAREM SCHLAMM
METHOD AND UNIT FOR THE PURIFICATION OF WASTEWATER WITH AEROBIC GRANULAR SLUDGE

(30) Priorité: 06.08.2007 FR 0705735
(43) Date de publication de la demande: 21.04.2010
(73) Titulaire: DEGREMONT, 92500 Rueil-Malmaison (FR)
(72) Inventeur: BAIG, Sylvie, F-78360 Montesson (FR); BARON, Marylène, F - 27200 Vernon (FR)
(74) Mandataire: Michardière, Bernard
(86) Numéro de dépôt international: PCT/FR2008/001135
(87) Numéro de publication internationale: WO 2009/050347

(56) Documents cités:
- NL-A- 9 301 791
- US-A- 4 122 013
- US-A1- 2001 027 948
- US-A1- 2003 173 291

## Description

L'invention concerne un procédé pour la purification d'eaux usées d'origine urbaine ou industrielle dans un réacteur contenant des boues granuleuses aérobies supportées ou non.

Les boues granuleuses aérobies non supportées sont définies comme étant une communauté d'espèces microbiennes agrégées entre elles et compacte de taille comprise entre 0.2 et 2 mm, ayant des propriétés de décantation nettement plus rapide qu'une boue activée classique ; la vitesse de décantation des boues granuleuses en question est d'au moins 10 m/h.

EP- A - 0 849 229 décrit un procédé mettant en oeuvre un réacteur à deux compartiments pour épurer les eaux usées en utilisant des boues granuleuses non supportées. Dans ce procédé, l'eau usée est introduite dans un premier compartiment du réacteur, tandis que les boues granuleuses sont introduites dans un deuxième compartiment Les deux compartiments communiquent entre eux en partie basse. Un gaz contenant de l'oxygène est introduit par le fond du deuxième compartiment. Les boues granuleuses ont un mouvement ascendant grâce à l'aération suffisamment puissante. Ces boues passent dans le premier compartiment, non aéré, comprenant un séparateur immergé à partir duquel est extrait l'eau traitée. Ce réacteur a l'avantage de permettre un fonctionnement en mode continu. En revanche, il fonctionne avec re-circulation interne des boues granuleuses de sorte qu'aucune pression de sélection ne peut s'exercer pour assurer un fonctionnement optimal avec des boues correspondant effectivement à la définition de boues granuleuses aérobies.

NL-A- 9301 791 décrit une installation et un procédé d'épuration d'eaux résiduaires par voie biologique comportant un réacteur divisé en deux parties, ledit réacteur comprenant un premier compartiment conçu pour le traitement anaérobie et un deuxième compartiment conçu pour le traitement aérobie. Les compartiments communiquent entre eux et l'eau à traiter arrive dans le compartiment anaérobie. Le traitement global alterne entre un traitement anaérobie et un traitement aérobie.

US 6193822 décrit un procédé pour produire des boues granuleuses en vue de leur utilisation en traitement d'eaux usées. Selon ce procédé, on utilise une colonne à bulles, et la granulation des boues en milieu eau résiduaire nécessite d'appliquer l'enchaînement des sept opérations suivantes :
- alimentation en eau usée du réacteur contenant la boue non granulée,
- aération avec du gaz contenant de l'oxygène et permettant le mélange eau-boue;
- période de famine en aération,
- décantation,
- évacuation de l'eau traitée,
- répétition des précédentes étapes jusqu'à obtenir les granules ayant les propriétés physiques désirées,
- récupération des granules ayant les propriétés souhaitées.

La granulation des boues résulte d'un équilibre complexe entre des phénomènes biologiques et physiques que sont la croissance lente de la biomasse anaérobie, située vers l'intérieur d'un granule, et la croissance contrôlée de la biomasse aérobie simultanée au phénomène de détachement de biofilm, la biomasse aérobie étant située à la périphérie des granules.

WO 2004/024638 décrit un procédé de traitement des eaux usées avec des boues granuleuses aérobies fonctionnant selon trois étapes : une première consistant à alimenter le réacteur contenant les boues granuleuses, une deuxième étape de fluidisation des boues grâce à l'aération et une troisième étape de décantation. Ce procédé est également mis en oeuvre en réacteur à entraînement à l'air avec un rapport hauteur/diamètre égal à 20. L'application industrielle de ce procédé est limitée à de faibles débits d'eaux usées puisque la hauteur maximale de construction généralement admise s'élève à moins de 10 m, de sorte que le diamètre se trouve limité à 0.5 m environ.

L'état de la technique concernant l'utilisation de boues granuleuses aérobies, selon les types de fonctionnement décrits ci-dessus en colonne à bulles ou en réacteur à entraînement à l'air, montre qu'une hauteur de réacteur élevée correspondant à un rapport hauteur/diamètre au moins égal à 5 est nécessaire pour assurer une attrition suffisante des agrégats microbiens au cours de l'aération et ainsi contrôler la taille et la cohésion des granules (State of art of biogranulation technology for waste water treatment par Y.Liu et JH Tay dans Biotechnology Advances 22 (2004) p.533-563). L'attrition permet la sélection ultérieure des granules de bonne qualité à maintenir dans le réacteur par le biais de la vitesse de décantation. Les granules de mauvaise qualité décantent plus lentement et sont éliminés dans la phase d'extraction de l'eau traitée. D'un point de vue hydraulique, ce type de réacteur dans la phase d'aération s'assimile à un réacteur parfaitement mélangé. Le contrôle de la taille des granules est lié au degré de turbulence du milieu qui conditionne la force de cisaillement appliquée aux granules et à la durée de cette phase qui, de plus, doit être compatible avec les vitesses de réaction biologique en phase aérobie.

En conclusion, les documents cités de l'état de la technique ne permettent pas un traitement satisfaisant à échelle industrielle des eaux usées avec des boues granuleuses.

L'invention a pour but, surtout, de proposer un procédé optimisé d'épuration biologique d'eaux résiduaires à l'aide de boues granuleuses aérobies, permettant de traiter avec efficacité des débits importants dans des conditions économiques satisfaisantes.

Un autre objectif de l'invention est de fournir un système d'épuration d'exploitation aisée, facile à dimensionner et s'adaptant à une large gamme de débits à traiter et aux variations importantes de qualité d'eau à traiter en terme de débit, de charges en pollution à éliminer.

Selon l'invention, le procédé d'épuration d'eaux résiduaires par voie biologique met en oeuvre un réacteur comportant un premier et un deuxième compartiments communiquant entre eux en partie basse, l'eau à traiter arrivant dans le premier compartiment, le deuxième compartiment contenant des boues granuleuses aérobies et se trouvant à la pression atmosphérique, et une injection de gaz chargé d'oxygène étant prévue en partie basse du deuxième compartiment, et est caractérisé en ce que :
- les boues granuleuses forment un lit dans le deuxième compartiment,
- on fait fonctionner le réacteur de manière séquentielle et discontinue selon un cycle comprenant deux phases à savoir :
- une première phase anaérobie au cours de laquelle:
   - le premier compartiment est rempli sous dépression avec de l'eau à traiter,
   - puis la pression du premier compartiment est brutalement ramenée à la pression atmosphérique pour évacuer rapidement un volume d'eau à traiter vers le deuxième compartiment dans lequel aucune injection de gaz chargé d'oxygène n'a lieu,
   - les deux opérations précédentes sont répétées plusieurs fois pour introduire et répartir un volume suffisant d'effluent en mode pulsé et séquentiel dans le deuxième compartiment , les réactions biologiques étant effectuées en milieu anaérobie avec lit de boues pulsé et expansé sous l'effet de la contrainte hydraulique de l'alimentation,
- une deuxième phase aérobie au cours de laquelle
   - l'alimentation en eau à traiter est arrêtée, l'obturateur d'une zone de concentration de boues est placé en position fermée,
   - une injection de gaz contenant de l'oxygène a lieu dans le deuxième compartiment, les réactions biologiques étant effectuées en milieu aérobie avec boues agitées sous l'effet de l'injection de gaz,
   - on arrête l'injection de gaz et on laisse les boues granuleuses décanter rapidement,
   - l'eau traitée est extraite du deuxième compartiment, l'obturateur de la zone de concentration de boues est placé en position ouverte,
puis un autre cycle recommence.

De préférence, au cours de la première phase anaérobie, on sélectionne les boues granuleuses aérobies en séparant les boues non agglomérées dans la zone de concentration interne au deuxième compartiment, et en fin de deuxième phase aérobie on vidange les boues extraites dans cette zone de concentration.

Le gaz injecté lors de la deuxième phase est de l'oxygène, ou de préférence de l'air.

Les boues granuleuses peuvent être introduites préformées dans le réacteur en début de fonctionnement, ou être produites *in situ* dans une phase préalable au traitement effectif de l'eau résiduaire.

Lors de la deuxième phase aérobie, l'effet d'agitation peut être assisté d'une agitation mécanique.

Plusieurs seconds compartiments peuvent être associés à un même premier compartiment pour assurer un traitement en continu des eaux résiduaires.

La vitesse d'écoulement de l'effluent du premier compartiment vers le deuxième compartiment lors de la mise à la pression atmosphérique du premier compartiment est de préférence supérieure à 20m/h. Si le diamètre moyen des granules des boues a tendance à diminuer, on peut réduire la durée d'aération, et ainsi le temps de famine des micro-organismes, lors de la phase aérobie pour provoquer une augmentation du diamètre. Les durées des différentes étapes du cycle peuvent être ajustées pour maintenir la qualité et la quantité de boues granuleuses. A cet effet, on peut prévoir un capteur de niveau du lit de boues granuleuses dont la mesure est prise en compte pour agir sur les durées des étapes.

Selon le procédé objet de l'invention, le maintien de la qualité et des performances des boues granuleuses aérobies est assuré:
- en répartissant de façon homogène l'effluent à traiter dans le volume de lit de boues grâce à l'alimentation séquentielle et pulsée pendant la période d'épuration en milieu anaérobie,
- en opérant les réactions biologiques en milieu anaérobie avec pulsation du lit pour favoriser la constitution d'un lit avec gradient de tailles de particules sur la hauteur favorable à la séparation graduelle des boues libres,
- en combinant la pulsation du lit de boues en milieu anaérobie à la turbulence des granules en milieu aérobie pour maîtriser la distribution des tailles de granules et les propriétés qui en résultant.

La granulation des boues est déterminée par le couplage de régimes hydrodynamiques adaptés à la fois dans les phases anaérobie et aérobie. Selon le procédé de l'invention, les boues sont maintenues "granuleuses aérobies" en exerçant une sélection, absente du procédé selon EP-A-0 849 229.

L'invention concerne également une installation d'épuration d'eaux résiduaires par voie biologique comportant un réacteur avec un premier et un deuxième compartiments communiquant entre eux en partie basse, l'eau à traiter arrivant dans le premier compartiment, le deuxième compartiment contenant des boues granuleuses aérobies et se trouvant à la pression atmosphérique, et un moyen d'injection de gaz chargé d'oxygène étant prévu en partie basse du deuxième compartiment, caractérisée en ce que :
- le réacteur est un réacteur séquentiel discontinu,
- le premier compartiment est fermé en partie haute et peut être isolé de l'atmosphère, la hauteur du premier compartiment étant supérieure à celle du deuxième compartiment;
- des moyens de mise en dépression et en pression sont disposés en zone haute non immergée du premier compartiment,
- des moyens d'injection et de répartition de l'eau à traiter sont positionnés en zone basse dans le deuxième compartiment,
- et le réacteur est prévu pour fonctionner selon un cycle comprenant deux phases à savoir :
   - une première phase anaérobie au cours de laquelle :
      - le premier compartiment est rempli sous dépression avec de l'eau à traiter,
      - puis la pression du premier compartiment est brutalement ramenée à la pression atmosphérique pour évacuer rapidement un volume d'eau à traiter vers le deuxième compartiment dans lequel aucune injection de gaz chargé d'oxygène n'a lieu,
      - les deux opérations précédentes sont répétées plusieurs fois pour introduire et répartir un volume suffisant d'effluent en mode pulsé et séquentiel dans le deuxième compartiment, les réactions biologiques étant effectuées en milieu anaérobie avec lit de boues pulsé et expansé sous l'effet de la contrainte hydraulique de l'alimentation,
   - une deuxième phase aérobie au cours de laquelle
      - l'alimentation en eau à traiter est arrêtée,
      - une injection de gaz contenant de l'oxygène a lieu dans le deuxième compartiment, les réactions biologiques étant effectuées en milieu aérobie avec boues agitées sous l'effet de l'injection de gaz,
      - on arrête l'injection de gaz et on laisse les boues granuleuses décanter rapidement,
      - l'eau traitée est extraite du deuxième compartiment,
puis un autre cycle recommence.

De préférence, l'installation comporte un concentrateur de boues situé à la périphérie externe du deuxième compartiment, du côté opposé au premier compartiment et muni d'un obturateur ou clapet automatisé. L'obturateur est fermé pendant la phase aérobie et est ouvert, à la fin de la phase aérobie, pour rester ouvert pendant la phase anaérobie.

Au moins un dispositif d'agitation mécanique est généralement disposé dans le deuxième compartiment.

L'installation peut comporter plusieurs seconds compartiments associés à un même premier compartiment pour assurer un traitement en continu des eaux résiduaires, avec des moyens pour faire communiquer et/ ou isoler chaque second compartiment relativement au premier compartiment.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig.1 est une coupe verticale schématique d'une installation conforme à l'invention,
Fig.2 est une coupe schématique partielle selon la ligne II-II de Fig.1.
Fig.3 est une vue schématique de dessus d'une installation avec plusieurs seconds compartiments associés à un même premier compartiment, et
Fig. 4 est une coupe verticale schématique d'une pelle flottante.

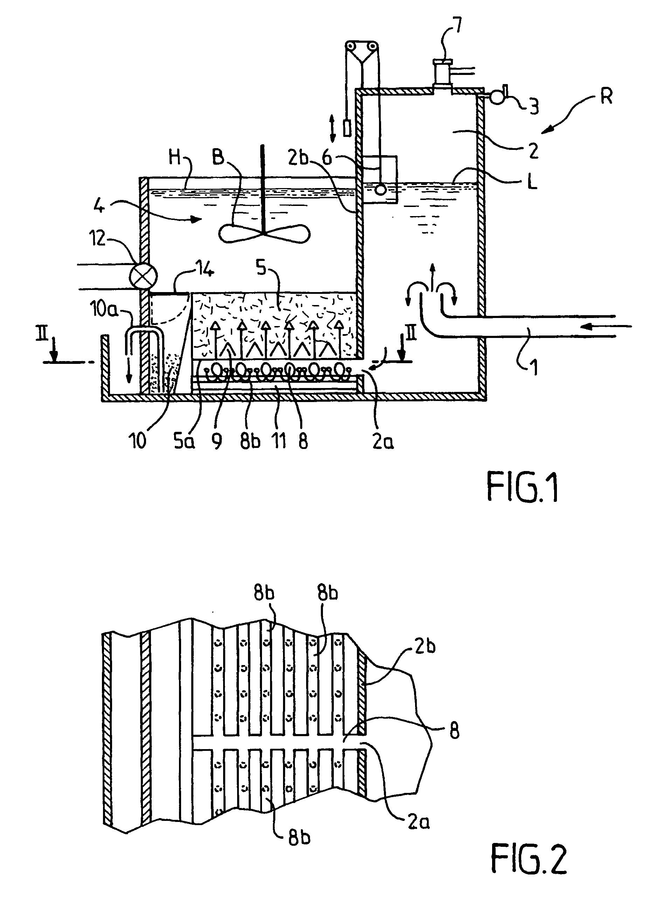

En se référant à Fig.1, on peut voir un exemple de réalisation d'une installation d'épuration d'eaux résiduaires par voie biologique en présence de boues granuleuses aérobies selon l'invention.

L'installation comprend un réacteur séquentiel discontinu R pourvu d'une arrivée 1 de l'effluent dans un premier compartiment 2 d'alimentation, en forme de cloche. Ce compartiment 2 est fermé en partie haute et peut être isolé de l'atmosphère. Une dépression peut être créée dans cette partie haute à l'aide d'un ventilateur ou d'un surpresseur fonctionnant en pompe à vide 3. Dans ces conditions, le niveau L de l'eau brute monte progressivement dans le compartiment 2 jusqu'à atteindre une hauteur de 0,6 à 1 m au-dessus du plan d'eau H d'un deuxième compartiment 4, ou compartiment de réaction et de séparation, qui se trouve à la pression atmosphérique. La hauteur du premier compartiment 2 est supérieure à celle du deuxième compartiment 4.

La structure générale du réacteur R correspond sensiblement à celle de décanteurs à pulsations construits et commercialisés par la Société demanderesse et décrits notamment dans le « Memento technique de l'eau » 10ème édition DEGREMONT SUEZ, tome 2, pages 844-849. La mise en oeuvre et l'application du réacteur R de l'invention diffèrent totalement des décanteurs en question.

Les compartiments 2 et 4 communiquent entre eux par un passage 2a prévu en partie basse d'une cloison de séparation 2b. Le deuxième compartiment 4 contient un lit 5 de boues granuleuses déposé à la base du compartiment 4 sur une grille ou un support perforé 5a horizontal. Le lit 5 est compacté sous l'effet de la gravité.

Un relais électrique (non représenté) relié à un détecteur de niveau 6 commande l'ouverture brusque d'une vanne casse-vide 7 de mise en communication de la partie haute du premier compartiment 2 avec l'atmosphère. L'eau pénètre alors dans le compartiment 4 de réaction et de séparation par une canalisation 8 sur laquelle sont branchées des canalisations de dérivation 8b généralement orthogonales à la canalisation 8, pour assurer une répartition uniforme de la distribution d'eau sous le lit 5 de boues granuleuses.

La survitesse crée par le fonctionnement du compartiment 2 doit être suffisante pour permettre de fluidiser le lit de boue 5

Les canalisations de dérivation 8b sont munies de dispositifs d'éjection d'eau avec une grande vitesse (supérieure à la vitesse minimale de fluidisation) faisant l'effet d'une chasse tandis que des tranquillisateurs 9 assurent le maintien d'une bonne répartition du liquide au travers du lit de boue qui se détasse et s'expanse de 10 à 30 %.

Les boues non agglomérées se déversent dans un concentrateur 10 correspondant à une fosse à fond incliné d'où elles sont extraites à intervalles réguliers par une conduite 10a et des moyens de pompage non représentés. Ce type de dispositif présente l'avantage de pouvoir purger sans risquer d'affecter le lit de boues. Le concentrateur est muni également d'un dispositif d'obturation (clapet automatisé) 14 permettant d'isoler le concentrateur en phase d'aération.

La durée et la fréquence des phases de mise sous vide et de chasse du premier compartiment 2 est ajustée pour répartir l'alimentation de l'effluent sur la durée nécessaire à la réaction biologique en condition anaérobie. Pendant cette période, les boues grossissent par assimilation des différents substrats, carbone, nitrates et sulfates tandis que le lit 5 de boues est soumis à des mouvements alternatifs verticaux et augmente de volume. Le mouvement du lit de boues et la création de volume interstitiel favorise la diffusion des substrats et la vitesse des réactions biologiques.

De plus, sous l'effet de la pulsation de l'alimentation, le lit de boues s'organise en tranches de boues de propriétés physiques différentes. Les boues granuleuses les plus denses se disposent dans les couches inférieures alors que les particules non agglomérées correspondant aux granules en formation ou défloculées se répartissent en surface. Une classification s'opère.

Le concentrateur 10 placé dans le deuxième compartiment permet de récupérer les boues granuleuses qui ne possèdent pas les caractéristiques physiques souhaitées.

Les boues granuleuses qui se maintiennent dans le lit 5 de boues offrent une moindre distribution de taille, ont une meilleure cohésion et un degré de sphéricité sensiblement amélioré.

Une rampe 11 munie d'un système d'injection de gaz contenant de l'oxygène, notamment d'air, est disposée au fond du deuxième compartiment 4 de réaction et de séparation. La rampe 11 peut être située au-dessous ou au-dessus des canalisations 8, 8b de distribution d'eau à traiter.

Avant le démarrage de la phase aérobie, l'obturateur 14 est en position fermée afin d'isoler le concentrateur.

L'introduction de gaz contenant de l'oxygène a lieu à l'issue de la première phase du procédé correspondant à une période de réaction en milieu anaérobie alors que l'alimentation en effluent est achevée.

Au cours de la deuxième phase aérobie, la vitesse du gaz insufflé par la rampe 11 doit être suffisante pour entraîner la mise en mouvement turbulent des granules nécessaire à provoquer l'attrition à l'origine du détachement de biofilm à croissance rapide.

A des fins d'économie d'énergie, un dispositif d'agitation mécanique adapté B, en particulier à hélice, peut compléter l'injection de gaz.

Dans tous les cas, le gaz fournit simultanément l'oxygène nécessaire aux réactions biologiques d'oxydation du carbone, de nitrification.

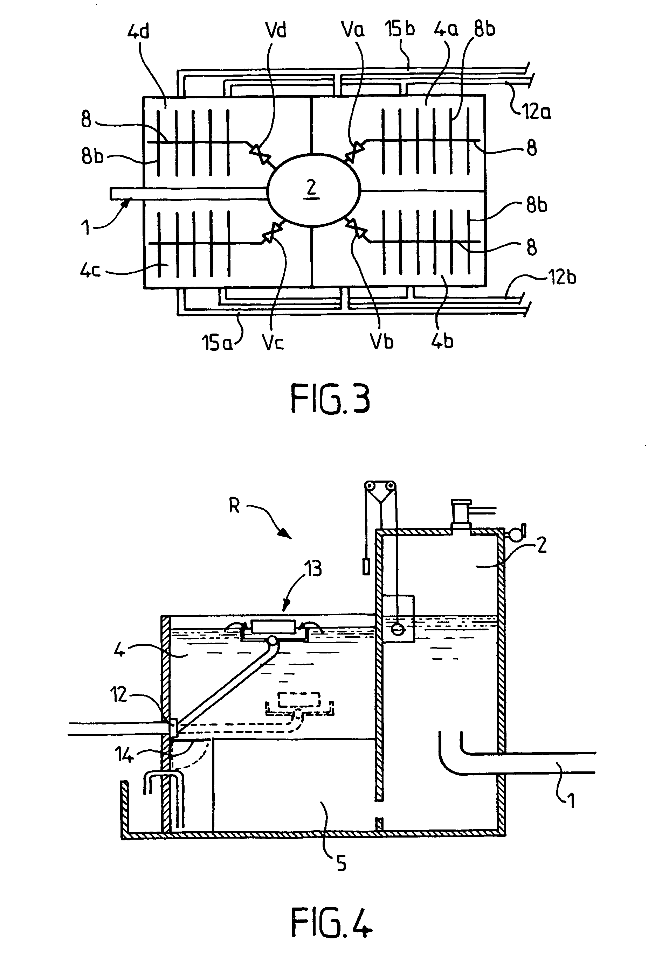

A l'issue de la durée des réactions aérobie, l'injection de gaz est arrêtée. L'eau épurée en carbone, azote, sulfates et phosphore est extraite via un dispositif 12 tel que déversoir ou vanne situé à hauteur médiane du réacteur ou par un déversoir flottant 13 ( Fig.4) de type pelle, relié à la sortie d'eau traitée par une conduite articulée sur un joint à rotule.

A la fin de la séquence de vidange, l'obturateur 14 est ouvert afin de permettre la sélection des granules en début d'alimentation.

L'installation permet de réaliser la séquence suivante nécessaire au maintien du système de traitement d'eaux résiduaires avec boues granuleuses aérobies dans un seul et même réacteur à lit de boues alternativement pulsé et agité, et soumis à sélection :
*Phase anaérobie*
   a) alimentation en eau brute pulsée : mise en fluidisation du lit de boue.
      Stratification et classification des boues et élimination par le sélecteur des granules de propriétés dégradées notamment en terme de décantation et de taille.
*Phase aérobie*
   b) mise en suspension turbulente ou non du système avec injection de gaz contenant de l'oxygène
   c) décantation et évacuation de l'eau traitée clarifiée par vanne de vidange.
   d) extraction des boues concentrées dans le sélecteur à fréquence.
   e) après la fin de la phase aérobie, nouvelle séquence de a) à c) ou a) à d).

La répétition de l'enchaînement des étapes biologiques réalisé comme décrit ci-dessus (alimentation et réaction en milieu anaérobie, réaction en milieu aérobie, décantation et extraction) entraîne une production de boues granuleuses plus sélective. Les boues granuleuses ainsi obtenues sont de meilleure qualité en terme de :
- distribution plus fine de tailles
- vitesse de décantation plus homogène
- distribution des populations bactériennes plus uniforme
- durée de maintien dans le réacteur.

Les boues granuleuses offrent alors des performances accrues liées au renouvellement de la surface active exposée aux substrats à transformer.

Pour assurer le traitement en continu des eaux résiduaires, comme illustré sur Fig.3, plusieurs deuxièmes compartiments sont disposés autour d'un même compartiment d'alimentation central 2. Le nombre des deuxièmes compartiments de réaction est calculé en fonction du temps de séjour de l'effluent. Fig.3 schématise une configuration à quatre deuxièmes compartiments de réaction 4a, 4b, 4c, 4d dont la communication avec le premier compartiment central est commandée par des vannes Va, Vb, Vc, Vd. Les deuxièmes compartiments peuvent être mis en communication avec le premier compartiment selon une permutation circulaire afin d'assurer en permanence une évacuation d'eau traitée sur les canalisations 12a ou 12b qui se rejoignent en aval. Les boues sont évacuées par des canalisations 15a, 15b.

Les avantages apportés par le procédé et l'installation objet de la présente invention sont importants. Ils permettent d'accroître l'efficacité du traitement en lui apportant une grande flexibilité d'exploitation et d'adaptation à des qualités et quantités d'effluents différents les uns des autres.

On donne ci-après un exemple pratique de réalisation et de mise oeuvre de l'invention en installation pilote, cet exemple n'ayant aucun caractère limitatif.

### EXEMPLE

Dans cet exemple, on a utilisé un réacteur dont le compartiment de réaction et de séparation est à base carrée de longueur 0,25 m et de volume utile égal à 0,200 m³ pour une hauteur d'eau de 3 m. Les boues granuleuses présentant un diamètre moyen de 1,8 mm ont une concentration de 13 kg/m³. Le compartiment d'alimentation 2 a une hauteur d'eau égale à 4 m sous dépression.

L'effluent à traiter était de l'eau résiduaire urbaine tamisée, de température 22°C et caractérisée par des concentrations :
Demande chimique en oxygène totale, DCO totale : 480 mg/L
Azote ammoniacal, N-NH₄⁺ : 42 mg N/L
Phosphore total, Ptotal : 5 mg/L

La séquence de traitement suivante à été appliquée par 100 L d'effluent traité.

L'effluent a été admis à la vitesse de 30 m/h dans le deuxième compartiment 4 de réaction en milieu anaérobie pendant une durée de 20 minutes moyennant des cycles de fonctionnement du premier compartiment 2, ou cloche, à 35 s de remplissage et 5 s de chasse.

De l'air a ensuite été injecté dans le deuxième compartiment 4 avec un débit de 5 m³/h pendant une durée de 30 minutes.

Une période de décantation de 5 minutes a été observée avant vidange de l'effluent traité.

La séquence ci-dessus a été répétée 9 fois de façon à traiter 1 m³ d'effluent. Les analyses pratiquées à partir des échantillons d'effluent traité montrent que les rendements d'élimination moyens sont :
Pour la demande chimique en oxygène totale, DCO totale : 88%
Pour l'azote ammoniacal, N-NH₄⁺ : 95 %
Pour le phosphore total, Ptotal : 78 %
Pour l'azote global, NGL : 70 %.

De plus, les variations enregistrées pour chacun d'eux ne sont pas significatives au regard des erreurs expérimentales de détermination des concentrations.

Ces résultats illustrent les très bonnes performances produites par le procédé et l'installation selon l'invention pour le traitement d'une eau résiduaire urbaine typique.

## Revendications

1. Procédé d'épuration d'eaux résiduaires par voie biologique mettant en oeuvre un réacteur comportant un premier (2) et un deuxième (4) compartiments communiquant entre eux en partie basse, l'eau à traiter arrivant dans le premier compartiment, le deuxième compartiment contenant des boues granuleuses aérobies et se trouvant à la pression atmosphérique, et une injection de gaz chargé d'oxygène étant prévue en partie basse du deuxième compartiment,
**caractérisé en ce que** :
- les boues granuleuses forment un lit (5) dans le deuxième compartiment (4),
- on fait fonctionner le réacteur de manière séquentielle et discontinue selon un cycle comprenant deux phases à savoir :
- une première phase anaérobie au cours de laquelle :
- le premier compartiment (2) est rempli sous dépression avec de l'eau à traiter,
- puis la pression du premier compartiment est brutalement ramenée à la pression atmosphérique pour évacuer rapidement un volume d'eau à traiter vers le deuxième compartiment (4) dans lequel aucune injection de gaz chargé d'oxygène n'a lieu,
- les deux opérations précédentes sont répétées plusieurs fois pour introduire et répartir un volume suffisant d'effluent en mode pulsé et séquentiel dans le deuxième compartiment (4), les réactions biologiques étant effectuées en milieu anaérobie avec lit de boues (5) pulsé et expansé sous l'effet de la contrainte hydraulique de l'alimentation,
- une deuxième phase aérobie au cours de laquelle
- l'alimentation en eau à traiter est arrêtée, l'obturateur d'une zone de concentration de boues (10) est placé en position fermée,
- une injection de gaz contenant de l'oxygène a lieu dans le deuxième compartiment (4), les réactions biologiques étant effectuées en milieu aérobie avec boues agitées sous l'effet de l'injection de gaz,
- on arrête l'injection de gaz et on laisse les boues granuleuses décanter rapidement,
- l'eau traitée est extraite du deuxième compartiment, l'obturateur de la zone de concentration de boues est placé à nouveau en position ouverte,
puis un autre cycle recommence.

2. Procédé selon la revendication 1, **caractérisé en ce que** au cours de la première phase anaérobie, on sélectionne les boues granuleuses aérobies en séparant les boues non agglomérées dans la zone de concentration (10) interne au deuxième compartiment (4), et en fin de deuxième phase aérobie on vidange les boues extraites dans cette zone de concentration.

3. Procédé selon la revendication 1 ou 2, **caractérisé en ce que** le gaz injecté lors de la deuxième phase est de l'air.

4. Procédé selon l'une quelconque des revendications précédentes, **caractérisé en ce que** les boues granuleuses sont introduites préformées dans le deuxième compartiment (4) en début de fonctionnement.

5. Procédé selon l'une quelconque des revendications 1 à 3, **caractérisé en ce que** les boues granuleuses sont produites *in situ* dans une phase préalable au traitement effectif de l'eau résiduaire.

6. Procédé selon l'une quelconque des revendications précédentes, **caractérisé en ce que**, lors de la deuxième phase aérobie, l'effet d'agitation est assisté d'une agitation mécanique (B).

7. Procédé selon l'une quelconque des revendications précédentes, **caractérisé en ce que** plusieurs seconds compartiments (4a, 4b, 4c, 4d) sont associés à un même premier compartiment (2) pour assurer un traitement en continu des eaux résiduaires.

8. Installation d'épuration d'eaux résiduaires par voie biologique comportant un réacteur avec un premier (2) et un deuxième (4) compartiments communiquant entre eux en partie basse, l'eau à traiter arrivant dans le premier compartiment, le deuxième compartiment contenant des boues granuleuses aérobies et se trouvant à la pression atmosphérique, et un moyen d'injection de gaz chargé d'oxygène étant prévu en partie basse du deuxième compartiment, **caractérisée en ce que** :
- le réacteur est un réacteur séquentiel discontinu,
- le premier compartiment (2) est fermé en partie haute et peut être isolé de l'atmosphère, la hauteur du premier compartiment (2) étant supérieure à celle du deuxième compartiment (4) ;
- des moyens de mise en dépression (3) et en pression (7) sont disposés en zone haute non immergée du premier compartiment (2),
- des moyens d'injection et de répartition (8,8b) de l'eau à traiter sont positionnés en zone basse dans le deuxième compartiment (4),
le réacteur étant prévu pour fonctionner selon un cycle comprenant deux phases à savoir :
- une première phase anaérobie au cours de laquelle :
- le premier compartiment (2) est rempli sous dépression avec de l'eau à traiter,
- puis la pression du premier compartiment est brutalement ramenée à la pression atmosphérique pour évacuer rapidement un volume d'eau à traiter vers le deuxième compartiment (4) dans lequel aucune injection de gaz chargé d'oxygène n'a lieu,
- les deux opérations précédentes sont répétées plusieurs fois pour introduire et répartir un volume suffisant d'effluent en mode pulsé et séquentiel dans le deuxième compartiment (4), les réactions biologiques étant effectuées en milieu anaérobie avec lit de boues (5) pulsé et expansé sous l'effet de la contrainte hydraulique de l'alimentation,
- une deuxième phase aérobie au cours de laquelle
- l'alimentation en eau à traiter est arrêtée,
- une injection de gaz contenant de l'oxygène a lieu dans le deuxième compartiment (4), les réactions biologiques étant effectuées en milieu aérobie avec boues agitées sous l'effet de l'injection de gaz,
- on arrête l'injection de gaz et on laisse les boues granuleuses décanter rapidement,
- l'eau traitée est extraite du deuxième compartiment,
puis un autre cycle recommence.

9. Installation selon la revendication 8, **caractérisée en ce qu'**elle comporte un concentrateur de boues (10) situé à la périphérie externe du deuxième compartiment (4), du côté opposé au premier compartiment (2) et muni d'un obturateur ou clapet automatisé(14).

10. Installation selon la revendication 8 ou 9, **caractérisée en ce qu'**au moins un dispositif d'agitation mécanique (B) est disposé dans le deuxième compartiment (4).

11. Installation selon l'une quelconque des revendication 8 à 10, **caractérisée en ce qu'**elle comporte plusieurs seconds compartiments (4a,4b,4c,4d) associés à un même premier compartiment (2) pour assurer un traitement en continu des eaux résiduaires, avec des moyens (Va,Vb,Vc,Vd) pour faire communiquer et/ ou isoler chaque second compartiment relativement au premier compartiment.

## Claims

1. A method for the biological purification of wastewater employing a reactor comprising a first compartment (2) and a second compartment (4) which communicate with each other in the lower part, the wastewater to be treated arriving in the first compartment, the second compartment containing aerobic granular sludge and being at atmospheric pressure, and an injection of oxygen-containing gas being provided in the lower part of the second compartment,
**characterized in that**:
- the granular sludge forms a bed (5) in the second compartment (4);
- the reactor is made to operate in sequential batch mode according to a cycle comprising two phases, namely:
- an anaerobic first phase during which:
- the first compartment (2) is filled under vacuum with wastewater to be treated,
- then the pressure in the first compartment is suddenly brought back to atmospheric pressure in order to rapidly discharge a volume of wastewater to be treated into the second compartment (4) in which no injection of oxygen-containing gas takes place and
- the above two operations are repeated several times in order to introduce and distribute a sufficient volume of effluent in pulsed sequential mode in the second compartment (4), the biological reactions being carried out in an anaerobic medium with the pulsed expanded sludge bed (5) under the effect of the hydraulic stress of the feed;
- an aerobic second phase during which:
- the feed of wastewater to be treated is stopped, the shutter of a sludge-concentrating zone (10) being placed in the closed position,
- an injection of oxygen-containing gas takes place in the second compartment (4), the biological reactions being carried out in an aerobic medium with sludge stirred under the effect of the gas injection,
- the gas injection is stopped and the granular sludge left to rapidly settle and
- the treated wastewater is extracted from the second compartment, the shutter of the sludge-concentrating zone being placed again in the open position;
after which another cycle starts.

2. The method as claimed in claim 1, **characterized in that**, during the anaerobic first phase, the aerobic granular sludge is selected by separating the unagglomerated sludge in the concentrating zone (10) inside the second compartment (4) and, at the end of the aerobic second phase, the extracted sludge in this concentrating zone is drained.

3. The method as claimed in claim 1 or 2, **characterized in that** the gas injected during the second phase is air.

4. The method as claimed in any one of the preceding claims, **characterized in that** the granular sludge is introduced preformed into the second compartment (4) at the start of operation.

5. The method as claimed in any one of claims 1 to 3, **characterized in that** the granular sludge is produced *in situ* in a phase prior to the actual treatment of the wastewater.

6. The method as claimed in any one of the preceding claims, **characterized in that**, during the aerobic second phase, the stirring effect is assisted by means of a mechanical stirrer (B).

7. The method as claimed in any one of the preceding claims, **characterized in that** several second compartments (4a, 4b, 4c, 4d) are associated with one and the same first compartment (2) in order for the wastewater to be treated continuously.

8. A unit for the biological purification of wastewater, comprising a reactor with a first compartment (2) and a second compartment (4) that communicate with each other in the lower part, the wastewater to be treated arriving in the first compartment, the second compartment containing aerobic granular sludge and being at atmospheric pressure, and a means for injecting oxygen-containing gas being provided in the lower part of the second compartment, **characterized in that**:
- the reactor is a sequential batch reactor;
- the first compartment (2) is closed at the upper part and may be isolated from the atmosphere, the height of the first compartment (2) being greater than that of the second compartment (4) ;
- vacuum means (3) and pressurizing means (7) are placed in the non-immersed upper zone of the first compartment (2);
- means (8, 8b) for injecting and distributing the wastewater to be treated are positioned in the lower zone in the second compartment (4),
the reactor being designed to operate according to a cycle comprising two phases, namely:
- an anaerobic first phase during which:
- the first compartment (2) is filled under vacuum with wastewater to be treated,
- then the pressure in the first compartment is suddenly brought back to atmospheric pressure in order to rapidly discharge a volume of wastewater to be treated into the second compartment (4) in which no injection of oxygen-containing gas takes place and
- the above two operations are repeated several times in order to introduce and distribute a sufficient volume of effluent in pulsed sequential mode in the second compartment (4), the biological reactions being carried out in an anaerobic medium with the pulsed expanded sludge bed (5) under the effect of the hydraulic stress of the feed;
- an aerobic second phase during which:
- the feed of wastewater to be treated is stopped,
- an injection of oxygen-containing gas takes place in the second compartment (4), the biological reactions being carried out in an aerobic medium with sludge stirred under the effect of the gas injection,
- the gas injection is stopped and the granular sludge left to rapidly settle and
- the treated wastewater is extracted from the second compartment
after which another cycle starts.

9. The unit as claimed in claim 8, **characterized in that** it includes a sludge concentrator (10) located on the external periphery of the second compartment (4) on the opposite side from the first compartment (2) and provided with an automated shutter or valve (14).

10. The unit as claimed in claim 8 or 9, **characterized in that** at least one mechanical stirrer (B) is placed in the second compartment (4).

11. The unit as claimed in any one of claims 8 to 10, **characterized in that** it includes several second compartments (4a, 4b, 4c, 4d) associated with one and the same first compartment (2) in order for the wastewater to be treated continuously, with means (Va, Vb, Vc, Vd) for bringing each second compartment into communication with the first compartment and/or for isolating each second compartment therefrom.

## Patentansprüche

1. Verfahren zur Reinigung von Abwässern auf biologischem Weg, das einen Reaktor verwendet, welcher einen ersten Raum (2) und einen zweiten Raum (4), die im unteren Teil miteinander verbunden sind, umfasst, wobei das zu behandelnde Wasser in dem ersten Raum eintrifft, wobei der zweite Raum aerobe körnige Schlämme enthält und auf atmosphärischem Druck ist, und wobei ein Einleiten von sauerstoffbeladenem Gas im unteren Teil des zweiten Raums vorgesehen ist,
**dadurch gekennzeichnet, dass:**
- die körnigen Schlämme ein Bett (5) in dem zweiten Raum (4) bilden,
- der Reaktor sequentiell und diskontinuierlich entsprechend einem Zyklus betrieben wird, der zwei Phasen umfasst, nämlich:
- eine anaerobe erste Phase, im Laufe derer:
- der erste Raum (2) unter Unterdruck mit zu behandelndem Wasser gefüllt wird,
- anschließend der Druck des ersten Raums schlagartig wieder auf den atomsphärischen Druck gebracht wird, um eine zu behandelnde Wassermenge schnell zu dem zweiten Raum (4) abzuführen, in dem keine Einleitung von sauerstoffbeladenem Gas stattfindet,
- die beiden vorhergehenden Vorgänge mehrere Male wiederholt werden, um eine ausreichende Abwassermenge im gepulsten und sequentiellen Modus in den zweiten Raum (4) einzuleiten und darin zu verteilen, wobei die biologischen Reaktionen in anaerobem Medium mit unter der Wirkung der hydraulischen Belastung der Zufuhr gepulstem und ausgedehntem Schlammbett (5) durchgeführt werden,
- eine aerobe zweite Phase, im Laufe derer
- die Zufuhr von zu behandelndem Wasser gestoppt wird, das Absperrorgan eines Schlammkonzentrationsbereichs (10) in die geschlossene Stellung bewegt wird,
- in dem zweiten Raum (4) ein Einleiten von sauerstoffhaltigem Gas stattfindet, wobei die biologischen Reaktionen in aerobem Medium mit unter der Wirkung der Gaseinleitung bewegten Schlämmen durchgeführt werden,
- die Gaseinleitung gestoppt wird und man die körnigen Schlämme schnell absetzen lässt,
- das behandelte Wasser aus dem zweiten Raum abgeführt wird, das Absperrorgan des Schlammkonzentrationsbereichs wieder in die geöffnete Stellung bewegt wird,
anschließend erneut ein weiterer Zyklus beginnt.

2. Verfahren nach Anspruch 1, **dadurch gekennzeichnet, dass** im Laufe der anaeroben ersten Phase die aeroben körnigen Schlämme **dadurch** selektiert werden, dass die nicht agglomerierten Schlämme in den innerhalb des zweiten Raums (4) befindlichen Konzentrationsbereich (10) separiert werden, und am Ende der aeroben zweiten Phase die in diesen Konzentrationsbereich abgesonderten Schlämme abgeführt werden.

3. Verfahren nach Anspruch 1 oder 2, **dadurch gekennzeichnet, dass** das während der zweiten Phase eingeleitete Gas Luft ist.

4. Verfahren nach einem der vorstehenden Ansprüche, **dadurch gekennzeichnet, dass** die körnigen Schlämme zu Betriebsbeginn vorgeformt in den zweiten Raum (4) eingeführt werden.

5. Verfahren nach einem der Ansprüche 1 bis 3, **dadurch gekennzeichnet, dass** die körnigen Schlämme in einer Phase vor der tatsächlichen Behandlung des Abwassers in situ erzeugt werden.

6. Verfahren nach einem der vorstehenden Ansprüche, **dadurch gekennzeichnet, dass** während der aeroben zweiten Phase die Rührwirkung durch ein mechanisches Rühren (B) unterstützt wird.

7. Verfahren nach einem der vorstehenden Ansprüche, **dadurch gekennzeichnet, dass** mehrere zweite Räume (4a, 4b, 4c, 4d) einem gleichen ersten Raum (2) zugeordnet sind, um eine kontinuierliche Behandlung der Abwässer zu gewährleisten.

8. Einrichtung zur Reinigung von Abwässern auf biologischem Weg, umfassend einen Reaktor, mit einem ersten Raum (2) und einem zweiten Raum (4), die im unteren Teil miteinander verbunden sind, wobei das zu behandelnde Wasser in dem ersten Raum eintrifft, wobei der zweite Raum aerobe körnige Schlämme enthält und auf atmosphärischem Druck ist, und wobei ein Mittel zum Einleiten von sauerstoffbeladenem Gas im unteren Teil des zweiten Raums vorgesehen ist, **dadurch gekennzeichnet, dass**:
- der Reaktor ein sequentieller, diskontinuierlicher Reaktor ist,
- der erste Raum (2) im oberen Teil verschlossen ist und von der Atmosphäre getrennt werden kann, wobei die Höhe des ersten Raums (2) größer als die des zweiten Raums (4) ist,
- Mittel zum Unterdruckbeaufschlagen (3) und zum Druckbeaufschlagen (7) im nicht eingetauchten oberen Bereich des ersten Raums (2) angeordnet sind,
- Mittel zum Einleiten und Verteilen (8, 8b) des zu behandelnden Wassers im unteren Bereich in dem zweiten Raum (4) angeordnet sind,
wobei der Reaktor vorgesehen ist, um entsprechend einem Zyklus zu arbeiten, der zwei Phasen umfasst, nämlich:
- eine anaerobe erste Phase, im Laufe derer:
- der erste Raum (2) unter Unterdruck mit zu behandelndem Wasser gefüllt wird,
- anschließend der Druck des ersten Raums schlagartig wieder auf den atmosphärischen Druck gebracht wird, um eine zu behandelnde Wassermenge schnell zu dem zweiten Raum (4) abzuführen, in dem keine Einleitung von sauerstoffbeladenem Gas stattfindet,
- die beiden vorhergehenden Vorgänge mehrere Male wiederholt werden, um eine ausreichende Abwassermenge im gepulsten und sequentiellen Modus in den zweiten Raum (4) einzuleiten und darin zu verteilen, wobei die biologischen Reaktionen in anaerobem Medium mit unter der Wirkung der hydraulischen Belastung der Zufuhr gepulstem und ausgedehntem Schlammbett (5) durchgeführt werden,
- eine aerobe zweite Phase, im Laufe derer
- die Zufuhr von zu behandelndem Wasser gestoppt wird,
- in dem zweiten Raum (4) ein Einleiten von sauerstoffhaltigem Gas stattfindet, wobei die biologischen Reaktionen in aerobem Medium mit unter der Wirkung der Gaseinleitung bewegten Schlämmen durchgeführt werden,
- die Gaseinleitung gestoppt wird und man die körnigen Schlämme schnell absetzen lässt,
- das behandelte Wasser aus dem zweiten Raum abgeführt wird, anschließend erneut ein weiterer Zyklus beginnt.

9. Einrichtung nach Anspruch 8, **dadurch gekennzeichnet, dass** sie einen Schlammkonzentrator (10) umfasst, der am Außenumfang des zweiten Raums (4), auf der dem ersten Raum (2) gegenüberliegenden Seite gelegen und mit einem automatisierten Absperrorgan oder Ventil (14) ausgestattet ist.

10. Einrichtung nach Anspruch 8 oder 9, **dadurch gekennzeichnet, dass** wenigstens eine mechanische Rührvorrichtung (B) in dem zweiten Raum (4) angeordnet ist.

11. Einrichtung nach einem der Ansprüche 8 bis 10, **dadurch gekennzeichnet, dass** sie, um eine kontinuierliche Behandlung der Abwässer zu gewährleisten, mehrere einem gleichen ersten Raum (2) zugeordnete zweite Räume (4a, 4b, 4c, 4d) umfasst, mit Mitteln (Va, Vb, Vc, Vd), um jeden zweiten Raum mit dem ersten Raum zu verbinden und/oder von diesem zu trennen.
